# FASCICULE DE BREVET EUROPEEN

(11) **EP 0 762 991 B1**
(45) Date de publication et mention de la délivrance du brevet: **19.01.2000**
(21) Numéro de dépôt: 96910062.7
(22) Date de dépôt: 28.03.1996
(51) Int. Cl.: C01B 33/193, C09C 1/30, C08K 3/36

(54) **NOUVEAU PROCEDE DE PREPARATION DE SILICE PRECIPITEE, NOUVELLES SILICES PRECIPITEES CONTENANT DU ZINC ET LEUR UTILISATION AU RENFORCEMENT DES ELASTOMERES**
VERFAHREN ZUR HERSTELLUNG VON FÄLLUNGSKIESELSÄURE, ZINK-ENTHALTENDE FÄLLUNGSKIESELSÄUREN UND VERWENDUNG ZUR VERSTÄRKUNG VON ELASTOMEREN
NOVEL METHOD FOR PREPARING PRECIPITATED SILICA, NOVEL ZINC-CONTAINING PRECIPITATED SILICAS, AND USE THEREOF FOR REINFORCING ELASTOMERS

(30) Priorité: 29.03.1995 FR 9503677
(43) Date de publication de la demande: 19.03.1997
(73) Titulaire: RHODIA CHIMIE, 92408 Courbevoie Cédex (FR)
(72) Inventeur: BOMAL, YVES, F-75018 Paris (FR); CHEVALLIER, Yvonick, F-69270 Fontaines-Saint-Martin (FR); PRAT, Evelyne, F-93500 Pantin (FR)
(74) Mandataire: Delenne, Marc
(86) Numéro de dépôt international: FR9600461
(87) Numéro de publication internationale: WO9630301

(56) Documents cités:
- EP-A- 0 407 262
- WO-A-95/09127
- FR-A- 2 303 763
- US-A- 4 040 858

## Description

La présente invention concerne un nouveau procédé de préparation de silice précipitée, des silices précipitées se présentant en particulier sous forme de poudre, de billes sensiblement sphériques ou de granulés, et leur application comme charge renforçante pour les élastomères.

On sait que la silice précipitée est utilisée depuis longtemps comme charge blanche renforçante dans les élastomères.

Cependant, comme toute charge renforçante, il convient qu'elle puisse se manipuler d'une part, et surtout s'incorporer d'autre part, facilement dans les mélanges.

On sait, d'une manière générale, que pour obtenir les propriétés de renforcement optimales conférées par une charge, il convient que cette dernière soit présente dans la matrice élastomère sous une forme finale qui soit à la fois la plus finement divisée possible et répartie de la façon la plus homogène possible. Or, de telles conditions ne peuvent être réalisées que dans la mesure où, d'une part, la charge présente une très bonne aptitude à s'incorporer dans la matrice lors du mélange avec l'élastomère (incorporabilité de la charge) et à se désagréger ou se désagglomérer sous la forme d'une poudre très fine (désagrégation de la charge), et où, d'autre part, la poudre issue du processus de désagrégation précité peut elle-même, à son tour, se disperser parfaitement et de façon homogène dans l'élastomère (dispersion de la poudre).

De plus, pour des raisons d'affinités réciproques, les particules de silice ont une fâcheuse tendance, dans la matrice élastomère, à s'agglomérer entre elles. Ces interactions silice/silice ont pour conséquence néfaste de limiter les propriétés de renforcement à un niveau sensiblement inférieur à celui qu'il serait théoriquement possible d'atteindre si toutes les interactions silice/élastomère susceptibles d'être créées pendant l'opération de mélange, étaient effectivement obtenues (ce nombre théorique d'interactions silice/élastomère étant, comme cela est bien connu, directement proportionnel à la surface externe, de la silice utilisée).

En outre, de telles interactions silice/silice tendent, à l'état cru, à augmenter la raideur et la consistance des mélanges, rendant ainsi leur mise en oeuvre plus difficile.

Le problème se pose de disposer de charges qui, tout en pouvant avoir une taille relativement élevée, améliorent les propriétés rhéologiques des élastomères et présentent avantageusement une bonne aptitude à la dispersion dans les élastomères.

La présente invention a pour but d'obvier aux inconvénients précités et de résoudre le problème sus-mentionné.

Plus précisément, elle a notamment pour but de proposer un nouveau procédé de préparation de silice précipitée ayant, de manière avantageuse, une bonne aptitude à la dispersion (et à la désagglomération) et des propriétés renforçantes très satisfaisantes, en particulier qui, utilisées à titre de charge renforçante pour élastomères, confère à ces derniers d'excellentes propriétés rhéologiques tout en leur procurant de bonnes propriétés mécaniques.

L'invention concerne également des silices précipitées qui, de préférence, se présentent sous forme de poudre, de billes sensiblement sphériques ou, éventuellement, de granulés, et qui, tout en présentant une taille relativement élevée, ont des propriétés renforçantes très satisfaisantes et, de manière avantageuse, une très bonne aptitude à la dispersion (et à la désagglomération).

Elle est relative enfin à l'utilisation desdites silices précipitées comme charges renforçantes pour élastomères.

Dans l'exposé qui suit, la surface spécifique BET est déterminée selon la méthode de BRUNAUER - EMMET - TELLER décrite dans "The journal of the American Chemical Society", Vol. 60, page 309, février 1938 et correspondant à la norme NFT 45007 (novembre 1987).

La surface spécifique CTAB est la surface externe déterminée selon la norme NFT 45007 (novembre 1987) (5.12).

La prise d'huile DOP est déterminée selon la norme NFT 30-022 (mars 1953) en mettant en oeuvre le dioctylphtalate.

La densité de remplissage à l'état tassé (DRT) est mesurée selon la norme NFT-030100.

Le pH est mesuré selon la norme ISO 787/9 (pH d'une suspension à 5 % dans l'eau).

On précise enfin que les volumes poreux donnés sont mesurés par porosimétrie au mercure, les diamètres de pores étant calculés par la relation de WASHBURN avec un angle de contact théta égal à 130° et une tension superficielle gamma égale à 484 Dynes/cm (porosimètre MICROMERITICS 9300).

L'aptitude à la dispersion et à la désagglomération des silices selon l'invention peut être quantifiée au moyen d'un test spécifique de désagglomération.

Le test de désagglomération est réalisé selon le protocole suivant :
la cohésion des agglomérats est appréciée par une mesure granulométrique (par diffraction laser), effectuée sur une suspension de silice préalablement désagglomérée par ultra-sonification ; on mesure ainsi l'aptitude à la désagglomération de la silice (rupture des objets de 0,1 à quelques dizaines de microns). La désagglomération sous ultra-sons est effectuée à l'aide d'un sonificateur VIBRACELL BIOBLOCK (600 W), équipé d'une sonde de diamètre 19 mm. La mesure granulométrique est effectuée par diffraction laser sur un granulomètre SYMPATEC.

On pèse dans un pilulier (hauteur : 6 cm et diamètre : 4 cm) 2 grammes de silice et l'on complète à 50 grammes par ajout d'eau permutée : on réalise ainsi une suspension aqueuse à 4 % de silice qui est homogénéisée pendant 2 minutes par agitation magnétique. On procède ensuite à la désagglomération sous ultra-sons comme suit : la sonde étant immergée sur une longueur de 4 cm, on règle la puissance de sortie de manière à obtenir une déviation de l'aiguille du cadran de puissance indiquant 20 % (ce qui correspond à une énergie dissipée par l'embout de la sonde de 120 Watt/cm²). La désagglomération est effectuée pendant 420 secondes. On réalise ensuite la mesure granulométrique après avoir introduit dans la cuve du granulomètre un volume (exprimé en ml) connu de la suspension homogénéisée.

La valeur du diamètre médian ⌀₅₀ que l'on obtient est d'autant plus faible que la silice présente une aptitude à la désagglomération élevée. On détermine également le rapport (10 x volume de suspension introduite (en ml))/densité optique de la suspension détectée par le granulomètre (cette densité optique est de l'ordre de 20). Ce rapport est indicatif du taux de fines, c'est-à-dire du taux de particules inférieures à 0,1 µm qui ne sont pas détectées par le granulomètre. Ce rapport appelé facteur de désagglomération aux ultra-sons (F_{D}) est d'autant plus élevé que la silice présente une aptitude à la désagglomération élevée.

L'un des objets de l'invention est un procédé de préparation de silice précipitée du type comprenant la réaction d'un silicate avec un agent acidifiant ce par quoi l'on obtient une suspension de silice précipitée, puis la séparation et le séchage de cette suspension, dans lequel on réalise la précipitation de la manière suivante :
(i) on forme un pied de cuve initial comportant un silicate de métal alcalin M, et un électrolyte, la concentration en silicate (exprimée en SiO₂) dans ledit pied de cuve initial étant inférieure à 20 g/l,
(ii) on ajoute l'agent acidifiant audit pied de cuve jusqu'à ce qu'au moins 5 % de la quantité de M₂O présente dans ledit pied de cuve soient neutralisés,
(iii) on ajoute au milieu réactionnel simultanément de l'agent acidifiant et un silicate de métal alcalin M telle que le rapport quantité de silicate ajoutée (exprimée en SiO₂) / quantité de silicate présente dans le pied de cuve initial (exprimée en SiO₂), appelé taux de consolidaiton, soit supérieur à 4 et d'au plus 100,
caractérisé en ce que ledit procédé comprend une des deux opéraitons (a) ou (b) suivantes :
(a) on ajoute, après l'étape (iii), au milieu réactionnel au moins un composé du zinc, puis un agent basique, et, lorsque ladite séparation comporte une filtration et un délitage du gâteau issu de cette filtration, ledit délitage est de préférence effectué en présence d'au moins un composé de l'aluminium,
(b) on ajoute, après l'étape (iii), au milieu réactionnel simultanément un silicate et au moins un composé du zinc et, lorsque ladite séparation comporte une filtration et un délitage du gâteau issu de cette filtration, le délitage est de préférence effectué en présence d'au moins un composé de l'aluminium.

Il a été ainsi trouvé que l'introduction de zinc, et ce selon une méthode particulière, combinée à une concentration faible en silicate (exprimée en SiO₂) dans le pied de cuve initial et à un taux de consolidation approprié lors de l'étape d'addition simultanée constituait une condition importante pour conférer aux produits obtenus leurs très bonnes propriétés, notamments des propriétés renforçantes très satisfaisantes (en particuiler au niveau de la rhéologie des élastomères).

Il est à noter, d'une manière générale, que le procédé concerné est un procédé de synthèse de silice de précipitation, c'est-à-dire que l'on fait agir, dans des conditions très particulières, un agent acidifiant sur un silicate.

Le choix de l'agent acidifiant et du silicate se fait d'une manière bien connue en soi.

On peut rappeler que l'on utilise généralement comme agent acidifiant un acide minéral fort tel que l'acide sulfurique, l'acide nitrique ou l'acide chlorhydrique, ou un acide organique tel que l'acide acétique, l'acide formique ou l'acide carbonique.

L'agent acidifiant peut être dilué ou concentré ; sa normalité peut être comprise entre 0,4 et 36 N, par exemple entre 0,6 et 1,5 N.

En particulier, dans le cas où l'agent acidifiant est l'acide sulfurique, sa concentration peut être comprise entre 40 et 180 g/l, par exemple entre 60 et 130 g/l.

On peut par ailleurs utiliser en tant que silicate toute forme courante de silicates tels que métasilicates, disilicates et avantageusement un silicate de métal alcalin, notamment le silicate de sodium ou de potassium.

Le silicate peut présenter une concentration exprimée en silice comprise entre 40 et 330 g/l, par exemple entre 60 et 300 g/l, en particulier entre 60 et 250 g/l.

De manière générale, on emploie, comme agent acidifiant, l'acide sulfurique, et, comme silicate, le silicate de sodium.

Dans le cas où l'on utilise le silicate de sodium, celui-ci présente, en général, un rapport pondéral SiO₂/Na₂O compris entre 2 et 4, par exemple entre 3,0 et 3,7.

En ce qui concerne plus particulièrement le procédé de préparation de l'invention, la précipitation se fait d'une manière spécifique selon les étapes suivantes.

On forme tout d'abord un pied de cuve qui comprend du silicate (étape (i)). La quantité de silicate présente dans le pied de cuve initial ne représente avantageusement qu'une partie de la quantité totale de silicate engagée dans la réaction.

Selon une caractéristique du procédé de préparation selon l'invention, la concentration en silicate dans le pied de cuve initial est (supérieure à 0 g/l et) inférieure à 20 g de SiO₂ par litre. Cette concentration peut être d'au plus 11 g/l et, éventuellement, d'au plus 8 g/l.

Notamment lorsque la séparation effectuée ultérieurement lors du procédé selon l'invention comprend une filtration effectuée au moyen d'un filtre presse (et plus particulièrement dans le cas où l'on souhaite préparer des silices ayant une surface spécifique CTAB d'au moins 140 m²/g), cette concentration peut être d'au moins 8g/l, en particulier comprise entre 10 et 15 g/l, par exemple entre 11 et 15 g/l ; le séchage mis en oeuvre plus loin dans le procédé selon l'invention peut être effectué par atomisation au moyen d'un atomiseur à buses.

Le pied de cuve peut comprendre un électrolyte. Néanmoins, de préférence, aucun électrolyte n'est utilisé au cours du procédé de préparation selon l'invention ; en particulier, de manière préférée, le pied de cuve initial ne comprend pas d'électrolyte.

Le terme d'électrolyte s'entend ici dan son acceptation normale, c'est-à-dire qu'il signifie toute substance ionique ou moléculaire qui, lorsqu'elle est en solution, se décompose ou se dissocie pour former des ions ou des particules chargées. On peut citer comme électrolyte un sel du groupe des sels des métaux alcalins et alcalino-terreux, notamment le sel du métal de silicate de départ et de l'agent acidifiant, par exemple le sulfate de sodium dans le cas de la réaction d'un silicate de sodium avec l'acide sulfurique.

La deuxième étape consiste à ajouter l'agent acidifiant dans le pied de cuve de composition décrite plus haut (étape (ii)).

Ainsi, dans cette deuxième étape, on ajoute l'agent acidifiant audit pied de cuve initial jusqu'à de qu'au moins 5 %, de préférence au moins 50 %, de la quantité M₂O présente dans ledit pied de cuve initial soient neutralisés.

De manière préférée, dans cette deuxième étape, on ajoute l'agent acidifiant audit pied de cuve initial jusqu'à ce que 50 à 99 % de la quantité de M₂O présente dans ledit pied de cuve initial soient neutralisés.

Une fois qu'est atteinte la valeur souhaitée de quantité M₂O neutralisé, on procède alors à une addition simultanée (étape (iii)) d'agent acidifiant et d'une quantité de silicate de métal alcalin M telle que le taux de consolidation, c'est-à-dire le rapport quantité de silicate ajoutée(exprimée en SiO₂) / quantité de silicate présente dans le pied de cuve initial (exprimée en SiO₂), soit supérieur à 4 et d'au plus 100.

Selon une variante du procédé de l'invention, on procède à cette addition simultanée d'agent acidifiant et d'une quantité de silicate de métal alcalin M telle que le taux de consolidation est plus particulièrement compris entre 12 et 100, de préférence entre 12 et 50, notamment entre 13 et 40.

Selon une autre variante du procédé de l'invention, on procède à cette addition simultanée d'agent acidifiant et d'une quantité de silicate de métal alcalin M telle que le taux de consolidation est plutôt supérieur à 4 et inférieur à 12, de préférence compris entre 5 et 11,5, notamment entre 7,5 et 11. Cette variante est, en général, mise en oeuvre quand la concentration en silicate dans le pied de cuve initial est d'au moins 8 g/l, en particulier entre 10 et 15 g/l, par exemple entre 11 et 15 g/l.

De manière préférée, pendant toute l'étape (iii), la quantité d'agent acidifiant ajoutée est telle que 80 à 99 %, par exemple 85 à 97 %, de la quantité de M₂O ajoutée soient neutralisés.

Dans l'étape (iii), il est possible de procéder à l'addition simultanée d'agent acidifiant et de silicate à un premier palier de pH du milieu réactionnel, pH₁, puis à un second palier de pH du milieu réactionnel, pH₂, tel que 7 < pH₂ < pH₁ < 9.

Selon une caractéristique essentielle du procédé de préparation selon l'invention, celui-ci comprend une des deux opérations (a) ou (b) mentionnées précédemment, c'est-à-dire :
(a) on ajoute, après l'étape (iii), au milieu réactionnel au moins un composé du zinc, puis un agent basique, et, lorsque la séparation, mise en oeuvre dans le procédé, comporte une filtration et un délitage du gâteau issu de cette filtration, ledit délitage est de préférence effectué en présence d'au moins un composé de l'aluminium, ou
(b) on ajoute, après l'étape (iii), au milieu réactionnel simultanément un silicate et au moins un composé du zinc et, lorsque la séparation, mise en oeuvre dans le procédé, comporte une filtration et un délitage du gâteau issu de cette filtration, le délitage est de préférence effectué en présence d'au moins un composé de l'aluminium.

Dans une première variante du procédé de préparation selon l'invention (c'est-à-dire lorsque celui-ci comprend l'opération (a)), on effectue avantageusement, après avoir réalisé la précipitation selon les étapes (i), (ii) et (iii) précédemment décrites, les étapes successives suivantes :
(iv) on ajoute au milieu réactionnel (c'est-à-dire à la suspension ou bouillie réactionnelle obtenue) au moins un composé du zinc,
(v) on ajoute au milieu réactionnel un agent basique, de préférence jusqu'à l'obtention d'une valeur du pH du milieu réactionnel comprise entre 7,4 et 10, en particulier entre 7,8 et 9,
(vi) on ajoute au milieu réactionnel de l'agent acidifiant, de préférence jusqu'à l'obtention d'une valeur du pH du milieu réactionnel d'au moins 7, en particulier comprise entre 7 et 8,5, par exemple entre 7 et 8.

Il peut être alors avantageux d'effectuer, après l'addition simultanée de l'étape (iii), un mûrissement du milieu réactionnel, ce mûrissement pouvant par exemple durer de 1 à 60 minutes, en particulier de 3 à 30 minutes.

Dans cette première variante, il peut être souhaitable, entre l'étape (iii) et l'étape (iv), et notamment avant ledit mûrissement éventuel, d'ajouter au milieu réactionnel une quantité supplémentaire d'agent acidifiant. Cette addition se fait généralement jusqu'à l'obtention d'une valeur du pH du milieu réactionnel comprise entre 3 et 6,5, en particulier entre 4 et 6.

L'agent acidifiant utilisé lors de cette addition est généralement identique à celui employé lors des étapes (ii), (iii) et (vi) de la première variante du procédé de préparation selon l'invention.

Un mûrissement du milieu réactionnel est habituellement effectué entre l'étape (v) et l'étape (vi), par exemple pendant 2 à 60 minutes, en particulier pendant 5 à 45 minutes.

De même, un mûrissement du milieu réactionnel est le plus souvent effectué après l'étape (vi), par exemple pendant 2 à 60 minutes, en particulier pendant 5 à 30 minutes.

L'agent basique utilisé lors de l'étape (iv) peut être une solution d'ammoniaque ou, de préférence, une solution d'hydroxyde de sodium (ou soude).

Dans une seconde variante du procédé de préparation selon l'invention (c'est-à-dire lorsque celui-ci comprend l'opération (b)), on effectue, après les étapes (i), (ii) et (iii) précédemment décrites, une étape (iv) qui consiste à ajouter au milieu réactionnel simultanément un silicate et au moins un composé du zinc.

Il peut être alors avantageux d'effectuer, après l'addition simultanée de l'étape (iv), un mûrissement du milieu réactionnel, ce mûrissement pouvant par exemple durer de 2 à 60 minutes, en particulier de 5 à 30 minutes.

Dans cette seconde variante, il peut être souhaitable, après l'étape (iv), et notamment après ce mûrissement éventuel, d'ajouter au milieu réactionnel une quantité supplémentaire d'agent acidifiant. Cette addition se fait généralement jusqu'à l'obtention d'une valeur du pH du milieu réactionnel d'au moins 7, en particulier comprise entre 7 et 8,5, par exemple entre 7 et 8.

L'agent acidifiant utilisé lors de cette addition est généralement identique à celui employé lors des étapes (ii) et (iii) de la seconde variante du procédé de préparation selon l'invention.

Un mûrissement du milieu réactionnel est habituellement effectué après cette addition d'agent acidifiant, par exemple pendant 1 à 60 minutes, en particulier pendant 3 à 30 minutes.

Le composé de zinc employé dans le procédé de préparation selon l'invention est en général un sel organique ou inorganique de zinc.

A titre d'exemples de sel organique, on peut citer notamment les sels d'acides carboxyliques ou polycarboxyliques, comme les sels d'acide acétique, citrique, tartrique ou oxalique.

A titre d'exemples de sel inorganique, on peut citer notamment les halogénures et les oxyhalogénures (comme les chlorures, les oxychlorures), les nitrates, les phosphates, les sulfates et les oxysulfates.

Dans la pratique, le composé de zinc peut être utilisé sous la forme d'une solution, en général aqueuse.

De préférence, on emploie à titre de composé du zinc un sulfate de zinc.

La température du milieu réactionnel est généralement comprise entre 60 et 98 °C.

Selon une variante de l'invention, la réaction est effectuée à une température constante comprise entre 70 et 96 °C.

Selon une autre variante de l'invention, la température de fin de réaction est plus élevée que la température de début de réaction : ainsi, on maintient la température au début de la réaction de préférence entre 70 et 96 °C, puis on augmente la température en quelques minutes, de préférence jusqu'à une valeur comprise entre 75 et 98 °C, valeur à laquelle elle est maintenue jusqu'à la fin de la réaction ; les opérations (a) ou (b) sont ainsi habituellement effectuées à cette valeur constante de température.

On obtient, à l'issue des étapes qui viennent d'être décrites, une bouillie de silice qui est ensuite séparée (séparation liquide-solide).

Dans la première variante du procédé de préparation selon l'invention (c'est-à-dire lorsque celui-ci comprend l'opération (a)), cette séparation comporte, en général, une filtration (suivie d'un lavage si nécessaire) et un délitage, ledit délitage étant effectué en présence d'au moins un composé de l'aluminium et, de préférence, en présence d'un agent acidifiant tel que décrit précédemment (dans ce dernier cas, le composé de l'aluminium et l'agent acidifiant sont avantageusemement ajoutés de manière simultanée).

L'opération de délitage, qui peut être réalisée par exemple par passage du gâteau de filtration dans un broyeur de type colloïdal ou à bille, permet notamment d'abaisser la viscosité de la suspension à sécher ultérieurement.

Dans la seconde variante du procédé de préparation selon l'invention (c'est-à-dire lorsque celui-ci comprend l'opération (b)), la séparation comporte aussi, en général, une filtration (suivie d'un lavage si nécessaire) et un délitage, ledit délitage étant de préférence effectué en présence d'au moins un composé de l'aluminium et, en général, en présence d'un agent acidifiant tel que décrit précédemment (dans ce dernier cas, le composé de l'aluminium et l'agent acidifiant sont avantageusemement ajoutés de manière simultanée).

Le composé de l'aluminium consiste, en général, en un aluminate de métal alcalin, notamment de potassium ou, de manière très préférée, de sodium.

De préférence, la quantité de composé de zinc utilisée dans le procédé de préparation selon l'invention est telle que la silice précipitée préparée contient entre 1 et 5 %, en particulier entre 1,5 et 4 %, par exemple entre 1,5 et 2,5 %, en poids de zinc.

La séparation mise en oeuvre dans le procédé de préparation selon l'invention comprend habituellement une filtration effectuée au moyen de toute méthode convenable, par exemple au moyen d'un filtre à bande, d'un filtre rotatif sous vide ou, de préférence, d'un filtre presse.

La suspension de silice précipitée ainsi récupérée (gâteau de filtration) est ensuite séchée.

Ce séchage peut se faire selon tout moyen connu en soi.

De préférence, le séchage se fait par atomisation.

A cet effet, on peut utiliser tout type d'atomiseur convenable, notamment un atomiseur à turbines, à buses, à pression liquide ou à deux fluides.

Le séchage est par exemple effectué par atomisation au moyen d'un atomiseur à buses notamment quand la concentration en silicate dans le pied de cuve initial est d'au moins 8 g/l (et inférieure à 20 g/l), en particulier comprise entre 10 et 15 g/l (et plus particulièrement dans le cas où l'on souhaite préparer des silices ayant une surface spécifique CTAB d'au moins 140 m²/g).

Selon un mode de réalisation de l'invention, la suspension à sécher présente un taux de matière sèche supérieur à 15 % en poids, de préférence supérieur à 17 % en poids et, par exemple, supérieur à 20 % en poids. Le séchage est alors de préférence effectué au moyen d'un atomiseur à buses.

La silice précipitée susceptible d'être obtenue selon ce mode de réalisation de l'invention et de préférence en mettant en oeuvre un filtre presse se présente avantageusement sous forme de billes sensiblement sphériques, de préférence d'une taille moyenne d'au moins 80 µm.

Il est à noter que l'on peut également, après la filtration, à une étape ultérieure du procédé, rajouter au gâteau de filtration de la matière sèche, par exemple de la silice sous forme pulvérulente.

A l'issue du séchage, on peut procéder à une étape de broyage sur le produir récupéré, notamment sur le produit obtenu par séchage de suspension présentant un taux de matière sèche supérieur à 15 % en poids. La silice précipitée qui est alors susceptible d'être obtenue se présente généralement sous forme d'une poudre, de préférence de taille moyenne d'au moins 15 µm, en particulier comprise entre 15 et 60 µm, par exemple entre 20 et 45 µm.

Les produits broyés à la granulométrie désirée peuvent être séparés des éventuels produits non conformes au moyen par exemple de tamis vibreurs présentant des tailles de maille appropriées, et les produits non conformes ainsi récupérés être renvoyés au broyage.

De même, selon un autre mode de réalisation de l'invention, la suspension à sécher présente un taux de matière sèche d'au plus 15 % en poids. Le séchage est alors en général effectué au moyen d'un atomiseur à turbines. La silice précipitée qui est alors susceptible d'être obtenue selon ce mode de réalisation de l'invention et de préférence en mettant en oeuvre un filtre rotatif sous vide se présente généralement sous la forme d'une poudre, de préférence de taille moyenne d'au moins 15 µm, en particulier comprise entre 30 et 150 µm, par exemple entre 45 et 120 µm.

Enfin, le produit séché (notamment à partir d'une suspension ayant un taux de matière sèche d'au plus 15 % en poids) ou broyé peut, selon un autre mode de réalisation de l'invention, être soumis à une étape d'agglomération.

On entend ici par agglomération tout procédé qui permet de lier entre eux des objets finement divisés pour les amener sous la forme d'objets de plus grande taille et résistant mieux mécaniquement.

Ces procédés sont notamment la compression directe, la granulation voie humide (c'est-à-dire avec utilisation d'un liant tel que eau, slurry de silice, ...), l'extrusion et, de préférence, le compactage à sec.

Lorsque l'on met en oeuvre cette dernière technique, il peut s'avérer avantageux, avant de procéder au compactage, de désaérer (opération aussi appelée pré-densification ou dégazage) les produits pulvérulents de manière à éliminer l'air inclus dans ceux-ci et assurer un compactage plus régulier.

La silice précipitée susceptible d'être obtenue selon ce mode de réalisation de l'invention se présente avantageusement sous la forme de granulés, de préférence de taille d'au moins 1 mm, en particulier comprise entre 1 et 10 mm.

A l'issue de l'étape d'agglomération, les produits peuvent être calibrés à une taille désirée, par exemple par tamisage, puis conditionnés pour leur utilisation future.

Les poudres, de même que les billes, de silice précipitée obtenues par le procédé selon l'invention offrent ainsi l'avantage, entre autre, d'accéder de manière simple, efficace et économique à des granulés tels que précités, notamment par des opérations classiques de mise en forme, telles que par exemple une granulation ou un compactage, sans que ces dernières n'entraînent de dégradations susceptibles de masquer, voire annihiler, les bonnes propriétés intrinsèques attachées à ces poudres ou ces billes, comme cela peut être le cas dans l'art antérieur en mettant en oeuvre des poudres classiques.

D'autres objets de l'invention consistent en de nouvelles silices précipitées ayant, de manière avantageuse, une bonne aptitude à la dispersion (et à la désagglomération) et des propriétés renforçantes très satisfaisantes, en particulier qui, utilisées à titre de charge renforçante pour élastomères, confère à ces derniers de très bonnes propriétés rhéologiques tout en leur procurant des propriétés mécaniques très satisfaisantes.

Ainsi, il est maintenant proposé, selon l'invention, une nouvelle silice précipitée caractérisée en ce qu'elle possède :
- une surface spécifique CTAB comprise entre 90 et 250 m²/g, par exemple entre 120 et 230 m²/g,
- une prise d'huile DOP inférieure à 300 ml/100g, de préférence comprise entre 200 et 295 ml/100g,
- une distribution poreuse telle que le volume poreux constitué par les pores dont le diamètre est compris entre 175 et 275 Å représente moins de 50 % du volume poreux constitué par les pores de diamètres inférieurs ou égaux à 400 Å,
- une teneur en zinc comprise entre 1 et 5 % en poids, de préférence entre 1,5 et 4 % en poids,
et en ce que le nombre N de molécules d'acide stéarique consommées par nm² de surface de silice, lorsque l'on fait réagir de l'acide stéarique avec de ladite silice dans du xylène pendant 2 heures à 120 °C, est d'au moins 1, de préférence d'au moins 1,2, en particulier d'au moins 1,5.

La silice selon l'invention présente, de manière préférée, une teneur en zinc comprise entre 1,5 et 4 % en poids ; cette teneur peut être notamment comprise entre 1,5 et 2,5 % en poids.

Une des caractéristiques essentielles de la silice précipitée selon l'invention est sa consommation, en milieu modèle (le xylène), d'un ingrédient de vulcanisation du caoutchouc (l'acide stéarique).

La Demanderesse a ainsi constaté que les silices précipitées présentant un nombre N particulier, en combinaison avec les autres caractéristiques mentionnées dans le présent exposé, permettaient notamment de conférer aux élastomères de très bonnes propriétés rhéologiques tout en leur procurant des propriétés mécaniques satisfaisantes.

Pour déterminer cette caractéristique (nombre N), on fait réagir de l'acide stéarique en présence de la silice dans du xylène, pendant 2 heures à 120 °C. Puis, on dose par spectrométrie infra-rouge (IR) la quantité d'acide stéarique restant dans le xylène après réaction ; on peut alors déduire la quantité d'acide stéarique qui a été consommée par la silice, et donc le nombre N de molécules d'acide stéarique consommées par nm² de surface de la silice.

On décrit plus précisément ci-dessous le mode opératoire utilisé pour déterminer cette caractéristique.

On ajoute 60,2 g (soit 70 ml) de xylène dans un ballon contenant 3,17 g d'acide stéarique. On bouche le ballon, puis on le place sous agitation magnétique pendant quelques minutes.

On ajoute ensuite 12,04 g de silice.

On place le ballon dans un bain d'huile à 120 °C, sous reflux (en y adaptant un réfrigérant). On met alors le ballon sous agitation magnétique pendant 105 mn. Puis on arrête l'agitation et on laisse encore le ballon dans le bain d'huile pendant 15 mn. La durée totale de la réaction à 120 °C est donc de 2 heures.

On retire le réfrigérant et on sort le ballon du bain d'huile.

On filtre le contenu du ballon sur un système de microfiltration (ensemble MILLIPORE avec filtres à membranes DURAPORE en fluorure de polyvinylidène (dimension des pores : 0,45 µm)).

On dilue ensuite, dans 10 g de xylène, 10 g du filtrat obtenu : on obtient une solution S.

Parallèlement, on prépare des solutions étalon d'acide stéarique dans le xylène (ayant un taux d'acide stéarique inférieur à 2 % en masse) et on réalise les spectres IR (de 400 à 4000 cm⁻¹) de chacunes d'entre elles. Le pic caractéristique de l'acide stéarique se situe à 1710 cm⁻¹. L'amplitude de ce pic associé au taux d'acide stéarique de la solution permet de tracer la droite du taux d'acide stéarique de la solution en fonction de l'absorbance IR à 1710 cm⁻¹ ; par régression linéaire, on obtient l'équation de la droite d'étalonnage.

De même, on réalise le spectre IR de la solution S. La valeur du pic caractéristique de l'acide stéarique ramenée à l'équation de la droite d'étalonnage permet de déterminer le taux d'acide stéarique présente dans la solution S ; en tenant compte de la masse de xylène ajouté lors de la dilution, on obtient le taux d'acide stéarique du filtrat de la réaction. Le taux et donc la quantité d'acide stéarique consommé par la silice au cours de la réaction se déduisent du taux d'acide stéarique initial et du taux d'acide stéarique après réaction (celui-ci étant le taux d'acide stéarique du filtrat). On détermine alors le nombre N de molécules d'acide stéarique consommées par nm² de surface de la silice.

Le zinc contenu dans la silice précipitée selon l'invention n'est pas, de manière préférée, sous forme cristallisée, mais se présente plutôt sous forme amorphe (ceci peut être déterminé par diffraction des rayons X).

Une autre caractéristique de la silice selon l'invention réside dans la distribution, ou répartition, du volume poreux, et notamment dans la distribution du volume poreux qui est généré par les pores de diamètres inférieurs ou égaux à 400 Å. Ce dernier volume correspond au volume poreux utile des charges qui sont employées dans le renforcement des élastomères. L'analyse des porogrammes montre qu'alors la silice selon l'invention possède une distribution poreuse telle que le volume poreux constitué par les pores dont le diamètre est compris entre 175 et 275 Å représente moins de 50 %, par exemple moins de 40 %, du volume poreux constitué par les pores de diamètres inférieurs ou égaux à 400 Å.

Selon un premier mode particulier (préféré) de réalisation de l'invention, la silice précipitée possède :
- une surface spécifique CTAB comprise entre 90 et 185 m²/g,
- un diamètre médian (⌀₅₀), après désagglomération aux ultra-sons, inférieur à 6 µm, de préférence inférieur à 5 µm.

Elle possède alors généralement une surface spécifique BET comprise entre 90 et 230 m²/g, en particulier entre 100 et 190 m²/g, par exemple entre 120 et 190 m²/g.

Selon une variante de ce mode de réalisation de l'invention, la silice précipitée possède :
- une surface spécifique CTAB comprise entre 90 et 140 m²/g, en particulier entre 100 et 135 m²/g, par exemple entre 120 et 135 m²/g,
- un diamètre médian (⌀₅₀), après désagglomération aux ultra-sons, inférieur à 4,5 µm, en particulier inférieur à 4 µm, par exemple inférieur à 3,8 µm.

Selon une autre variante de ce mode de réalisation de l'invention, la silice précipitée possède :
- une surface spécifique CTAB comprise entre 140 et 185 m²/g,
- un facteur de désagglomération aux ultra-sons (F_{D}) supérieur à 5,5 ml, en particulier supérieur à 11 ml.

Selon un deuxième mode particulier de réalisation de l'invention, la silice précipitée possède :
- une surface spécifique CTAB supérieure à 185 m²/g et inférieure à 220 m²/g,
- un diamètre médian (⌀₅₀), après désagglomération aux ultra-sons, inférieur à 8,5 µm, de préférence inférieur à 7 µm.

Elle possède alors généralement une surface spécifique BET comprise entre 190 et 280 m²/g, notamment entre 190 et 250 m²/g.

Le facteur de désagglomération aux ultra-sons (F_{D}) de la silice précipitée selon ce mode particulier de réalisation de l'invention peut être supérieur à 5,5 ml.

Selon une variante de l'invention, la silice possède un rapport surface spécifique BET / surface spécifique CTAB compris entre 1,0 et 1,2, c'est-à-dire qu'elle présente de préférence une faible microporosité.

Selon une autre variante de l'invention, la silice possède un rapport surface spécifique BET / surface spécifique CTAB supérieur à 1,2, par exemple compris entre 1,21 et 1,4, c'est-à-dire qu'elle présente une microporosité relativement élevée.

Le pH de la silice selon l'invention est, en général, compris entre 8,0 et 9,0, par exemple entre 8,3 et 8,9.

Les silices selon l'invention peuvent se présenter sous forme de poudre, de billes sensiblement sphériques ou, éventuellement, de granulés et sont notamment caractérisées par le fait que, tout en ayant une taille relativement élevée, elles présentent des propriétés renforçantes très satisfaisantes et, de préférence, une bonne aptitude à la dispersion et à la désagglomération.

Les poudres de silice selon l'invention présentent préférentiellement une taille moyenne d'au moins 15 µm ; celle-ci est par exemple comprise entre 15 et 60 µm (notamment entre 20 et 45 µm) ou entre 30 et 150 µm (notamment entre 45 et 120 µm).

Elles possèdent, de manière préférée, une prise d'hulie DOP comprise entre 240 et 290 ml/100g.

La densité de remplissage à l'état tassé (DRT) desdites poudres est, en général, d'au moins 0,17, et, par exemple, comprise entre 0,2 et 0,3.

Lesdites poudres présentent généralement un volume poreux total d'au moins 2,5 cm³/g, et, plus particulièrement, compris entre 3 et 5 cm³/g.

Elles permettent notamment d'obtenir un très bon compromis mise en oeuvre/propriétés mécaniques à l'état vulcanisé.

Elles constituent aussi des précurseurs privilégiés pour la synthèse de granulés tels que décrits plus loin.

Les billes sensiblement sphériques selon l'invention présentent préférentiellement une taille moyenne d'au moins 80 µm.

Selon certaines variantes de l'invention, cette taille moyenne des billes est d'au moins 100 µm, par exemple d'au moins 150 µm ; elle est généralement d'au plus 300 µm et se situe de préférence entre 100 et 270 µm. Cette taille moyenne est déterminée selon la norme NF X 11507 (décembre 1970) par tamisage à sec et détermination du diamètre correspondant à un refus cumulé de 50 %.

Elles possèdent, de manière préférée, une prise d'hulie DOP comprise entre 240 et 290 ml/100g.

La densité de remplissage à l'état tassé (DRT) desdites billes (ou perles) est, en général, d'au moins 0,17, et, par exemple, comprise entre 0,2 et 0,34.

Elles présentent habituellement un volume poreux total d'au moins 2,5 cm³/g, et plus particulièrement, compris entre 3 et 5 cm³/g.

Comme indiqué ci-avant, une telle silice sous forme de billes sensiblement sphériques, avantageusement pleines, homogènes, peu poussièrantes et de bonne coulabilité, présente, de préférence, bonne aptitude à la désagglomération et à la dispersion. En outre, elle présente de bonnes propriétés renforçantes. Une telle silice constitue également un précurseur privilégié pour la synthèse des poudres et des granulés selon l'invention.

Une telle silice sous forme de billes sensiblement sphériques constitue une variante très avantageuse de l'invention.

Les dimensions des granulés selon l'invention sont préférentiellement d'au moins 1 mm, en particulier comprises entre 1 et 10 mm, selon l'axe de leur plus grande dimension (longueur).

Ils possèdent, de manière préférée, une prise d'hulie DOP comprise entre 200 et 260 ml/100g.

Lesdits granulés peuvent se présenter sous des formes les plus diverses. A titre d'exemple, on peut notamment citer les formes sphérique, cylindrique, parallélépipédique, de pastille, de plaquette, de boulette, d'extrudé à section circulaire ou polylobée.

La densité de remplissage à l'état tassé (DRT) desdits granulés est en général d'au moins 0,27 et peut aller jusqu'à 0,37.

Ils présentent généralement un volume poreux total d'au moins 1 cm³/g, et, plus particulièrement, entre 1,5 et 2 cm³/g.

Les silices selon l'invention, notamment sous forme de poudre, de billes sensiblement sphériques ou de granulés, sont de préférence préparées selon l'une des variantes appropriées du procédé de préparation conforme à l'invention et décrit précédemment.

Les silices selon l'invention ou préparées par le procédé selon l'invention trouvent une application particulièrement intéressante dans le renforcement des élastomères, naturels ou synthétiques. Elles confèrent à ces élastomères d'excellentes propriétés rhéologiques tout en leur procurant de bonnes propriétés mécaniques et, en général, une bonne résistance à l'abrasion. De plus, ces élastomères sont alors de préférence sujets à un échauffement réduit.

L'invention est donc également relative à l'utilisation de ces silices pour améliorer les propriétés rhéologiques des élastomères.

Les exemples suivants illustrent l'invention sans toutefois en limiter la portée.

### EXEMPLE 1

Dans un réacteur en acier inoxydable muni d'un système d'agitation par hélices et d'un chauffage par double enveloppe, on introduit :
- 733 litres d'eau, et
- 46,5 litres d'une solution de silicate de sodium (de rapport pondéral SiO₂/Na₂O égal à 3,4) ayant une concentration exprimée en silice de 235 g/l.

La concentration en silicate exprimée en SiO₂ dans le pied de cuve initial est donc de 14 g/l. La solution est alors portée à une température de 80 °C tout en la maintenant sous agitation. L'ensemble de la réaction est effectué à 80 °C sous agitation. On y introduit ensuite, pendant 9 mn, de l'acide sulfurique dilué, de densité à 20 °C égale à 1,050, à un débit de 5,4 l/mn ; à l'issue de cette addition, le taux de neutralisation du pied de cuve est de 78 %, c'est-à-dire que 78 % de la quantité de Na₂O présente dans le pied de cuve initial sont neutralisés.

On introduit ensuite simultanément, pendant 90 mn, dans le milieu réactionnel une solution de silicate de sodium du type décrit ci-avant, à un débit de 4,3 I/mn, et de l'acide sulfurique dilué également du type décrit ci-avant, à un débit régulé de manière à maintenir, dans le milieu réactionnel, le pH :
- à une valeur de 8,5 ± 0,1 pendant les 55 premières minutes, puis
- à une valeur de 7,8 ± 0,1 pendant les 35 dernières minutes.

Lors de cette addition simultanée, le taux de neutralisation instantané est de 94 %, c'est-à-dire que 94 % de la quantité de Na₂O ajoutée (par mn) sont neutralisés.

Le taux de consolidation, à l'issue de cette addition simultanée, est égal à 8,3.

Après cette addition simultanée, on introduit ensuite dans le milieu réactionnel, pendant 12 minutes, à un débit de 9,3 I/mn, une solution aqueuse contenant 85 g/l de sulfate de zinc. A l'issue de cette addition, on introduit dans le milieu réactionnel une solution aqueuse contenant 180 g/l de soude, jusqu'à ce que le pH du milieu réactionnel soit égal à 8,9.

On arrête ensuite l'introduction de soude et on maintient le milieu réactionnel pendant 10 minutes sous agitation.

Puis on introduit de l'acide sulfurique du type décrit ci-avant, jusqu'à ce que le pH du milieu réactionnel soit égal à 7,1.

On arrête ensuite l'introduction d'acide et on procède à un mûrissement du milieu réactionnel pendant 5 minutes à une température de 80 °C.

La durée totale de la réaction est de 148 minutes.

On obtient ainsi une bouillie ou suspension de silice précipitée qui est ensuite filtrée et lavée au moyen d'un filtre presse.

Le gâteau obtenu est ensuite fluidifié par action mécanique et chimique (ajout simultané d'acide sulfurique et d'une quantité d'aluminate de sodium correspondant à un rapport pondéral Al/SiO₂ de 0,30 %). Après cette opération de délitage, la bouillie résultante, de pH égal à 8,4 et de perte au feu égale à 78,0 % (donc un taux de matière sèche de 22,0 % en poids), est atomisée au moyen d'un atomiseur à buses.

Les caractéristiques de la silice obtenue P1 sous forme de billes sensiblement sphériques sont alors les suivantes :
- surface spécifique CTAB 145 m²/g
- surface spécifique BET 175 m²/g
- prise d'huile DOP 275 ml/100g
- teneur pondéral en zinc 1,80 %
- volume poreux V1 représenté par les pores de d ≤ 400 Å 0,95 cm³/g
- volume poreux V2 représenté par les pores 175 Å ≤ d ≤ 275 Å 0,40 cm³/g
- rapport V2/V1 42 %
- pH 8,5
- taille moyenne des particules 210 µm

Le nombre N de molécules d'acide stéarique consommées par nm² de surface de silice, lorsque l'on fait réagir de l'acide stéarique avec de ladite silice P1 dans du xylène pendant 2 heures à 120 °C (conformément au mode opératoire exposé dans la description) est égal à 1,4.

On soumet la silice P1 au test de désagglomération tel que défini précédemment dans la description.

Après désagglomération aux ultra-sons, elle présente un diamètre médian (⌀₅₀) de 2,7 µm et un facteur de désagglomération aux ultra-sons (F_{D}) de 16 ml.

### EXEMPLE 2

Dans un réacteur en acier inoxydable muni d'un système d'agitation par hélices et d'un chauffage par double enveloppe, on introduit :
- 626 litres d'eau, et
- 36 litres d'une solution de silicate de sodium (de rapport pondéral SiO₂/Na₂O égal à 3,4) ayant une concentration exprimée en silice de 130 g/l.

La concentration en silicate exprimée en SiO₂ dans le pied de cuve initial est donc de 7,1 g/l. La solution est alors portée à une température de 95 °C tout en la maintenant sous agitation. L'ensemble de la réaction est effectué à 95 °C sous agitation. On y introduit ensuite, pendant 3 mn et 20 s, une solution d'acide sulfurique, de concentration égale à 80 g/l, à un débit de 5,4 l/mn ; à l'issue de cette addition, le taux de neutralisation du pied de cuve est de 67 %, c'est-à-dire que 67 % de la quantité de Na₂O présente dans le pied de cuve initial sont neutralisés.

On introduit ensuite simultanément, pendant 70 mn, dans le milieu réactionnel :
- une solution d'acide sulfurique du type décrit ci-avant, à un débit de 5,4 l/mn, et
- une solution de silicate de sodium du type décrit ci-avant, à un débit de 9,2 I/mn.

Lors de cette addition simultanée, le taux de neutralisation instantané est de 79 %, c'est-à-dire que 79 % de la quantité de Na₂O ajoutée (par mn) sont neutralisés.

Le taux de consolidation, à l'issue de cette addition simultanée, est égal à 17,9.

Après cette addition simultanée, on introduit ensuite dans le milieu réactionnel, pendant 12 minutes, à un débit de 9,3 I/mn, une soulution aqueuse contenant 85 g/l de sulfate de zinc. A l'issue de cette addition, on introduit dans le milieu réactionnel une solution aqueuse contenant 180 g/l de soude, jusqu'à ce que le pH du milieu réactionnel soit égal à 8,9.

On arrête ensuite l'introduction de soude et on maintient le milieu réactionnel pendant 10 minutes sous agitation.

Puis on introduit de une solution d'acide sulfurique du type décrit ci-avant, jusqu'à ce que le pH du milieu réactionnel soit égal à 7,1.

On arrête ensuite l'introduction d'acide et on procède à un mûrissement du milieu réactionnel pendant 5 minutes à une température de 95 °C.

La durée totale de la réaction est de 127 minutes.

On obtient ainsi une bouillie ou suspension de silice précipitée qui est ensuite filtrée et lavée au moyen d'un filtre presse.

Le gâteau obtenu est ensuite fluidifié par action mécanique et chimique (ajout simultané d'acide sulfurique et d'une quantité d'aluminate de sodium correspondant à un rapport pondéral Al/SiO₂ de 0,20 %). Après cette opération de délitage, la bouillie résultante, de pH égal à 8,4 et de perte au feu égale à 79,0 % (donc un taux de matière sèche de 21,0 % en poids), est atomisée au moyen d'un atomiseur à buses.

Les caractéristiques de la silice obtenue P2 sous forme de billes sensiblement sphériques sont alors les suivantes :
- surface spécifique CTAB 135 m²/g
- surface spécifique BET 147 m²/g
- prise d'huile DOP 250 ml/100g
- teneur pondéral en zinc 1,90 %
- volume poreux V1 représenté par les pores de d ≤ 400 Å 0,86 cm³/g
- volume poreux V2 représenté par les pores 175 Å ≤ d ≤ 275 Å 0,39 cm³/g
- rapport V2/V1 45 %
- pH 8,5
- taille moyenne des particules 220 µm

Le nombre N de molécules d'acide stéarique consommées par nm² de surface de silice, lorsque l'on fait réagir de l'acide stéarique avec de ladite silice P2 dans du xylène pendant 2 heures à 120 °C (conformément au mode opératoire exposé dans la description) est égal à 1,7.

On soumet la silice P2 au test de désagglomération tel que défini précédemment dans la description.

Après désagglomération aux ultra-sons, elle présente un diamètre médian (⌀₅₀) de 3,2 µm et un facteur de désagglomération aux ultra-sons (F_{D}) de 14,5 ml.

Les caractéristiques des silices préparées dans les exemple 1 et 2, ainsi que celles d'une silice commerciale vendue sous forme de billes sensiblement sphériques par la société RHONE-POULENC CHIMIE comme charge renforçante pour élastomères, en l'occurrence la silice ZEOSIL® 175 MP (référencée MP1), sont rassemblées dans le tableau I ci-dessous.

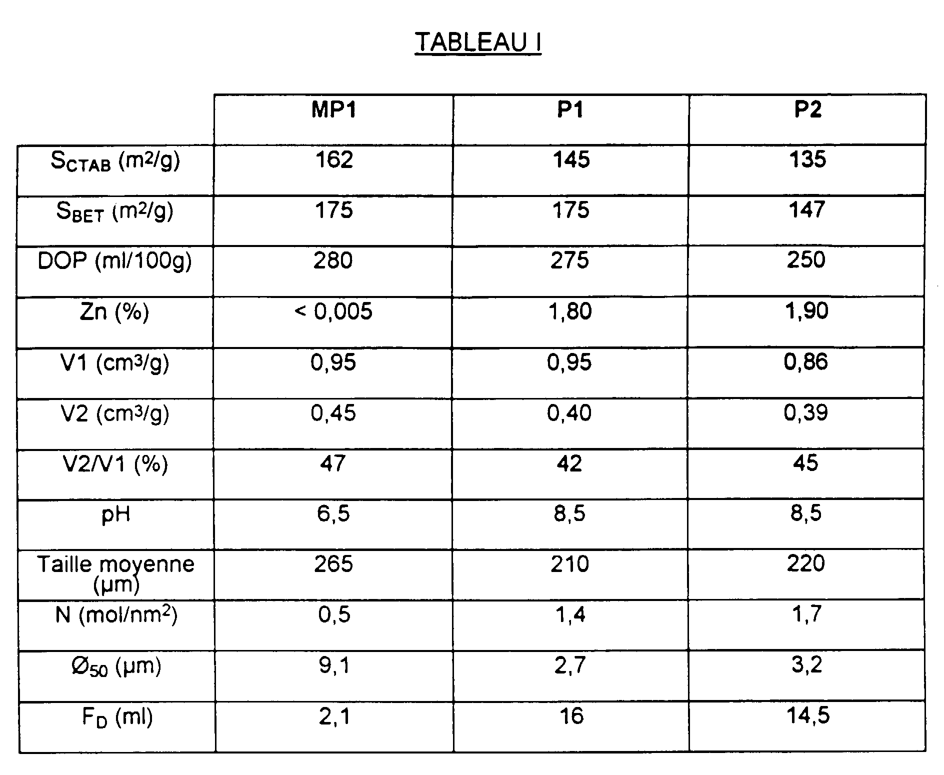

### EXEMPLE 3

Cet exemple illustre l'utilisation et le comportement d'une silice selon l'invention et d'une silice non conforme à l'invention dans une formulation pour caoutchouc industriel.

On utilise la formulation suivante (les parties sont exprimées en poids):
- Caoutchouc S.B.R. 1955 S 25 ⁽¹⁾ 50
- Caoutchouc B.R. 1220 ⁽²⁾ 25
- Caoutchouc naturel 25
- Silice 51
- ZnO actif ⁽³⁾ 1,8
- Acide stéarique 0,35
- 6PPD ⁽⁴⁾ 1,45
- CBS ⁽⁵⁾ 1,1
- DPG ⁽⁶⁾ 1,4
- Soufre ⁽⁷⁾ 0,9
- Silane X50S ⁽⁸⁾ 8,15

(1) Copolymère styrène butadiène solution type 1955 S 25
(2) Polymère butadiène type 1220
(3) Oxyde de zinc qualité caoutchouc
(4) N-(diméthyl-1,3 butyl)-N'-phényl-p-phénylène diamine
(5) N-cyclohexyl 2-benzothiazyl sulfènamide
(6) Diphényl guanidine
(7) Agent vulcanisant
(8) Agent de couplage silice/caoutchouc (produit commercialisé par la Société DEGUSSA)

Les formulations sont préparées de la manière suivante :

Dans un mélangeur interne (type BANBURY), on introduit dans cet ordre et aux temps et températures du mélange indiqués entre parenthèses :
- du S.B.R. 1955 S 25, du B.R.1220 et du caoutchouc naturel (tₒ)(60 °C)
- le X50S et les 2/3 de la silice (tₒ + 1 mn)(80 °C)
- le ZnO, l'acide stéarique, le 6PPD et 1/3 de la silice (tₒ + 2 mn)(100 °C)

La décharge du mélangeur (tombée du mélange) se fait quand la température de la chambre atteint 165 °C (c'est-à-dire, à peu prés tₒ + 5 mn 10 s). Le mélange est introduit sur un mélangeur à cylindres, maintenus à 30 °C, pour y être calandré. Sur ce mélangeur, on introduit le CBS, le DPG et le soufre.

Après homogénéisation et trois passages au fin, le mélange final est calandré sous la forme de feuilles de 2,5 à 3 mm d'épaisseur.

Les résultats des essais sont les suivants :

### 1- Propriétés rhéologiques

Les mesures sont réalisées sur les formulations à l'état cru.

Les résultats sont reportés dans le tableau Il ci-dessous. On a indiqué l'appareillage utilisé pour conduire les mesures.

**TABLEAU II**

| | MP1 | P1 |
|---|---|---|
| Consistance MOONEY ⁽¹⁾ | 130 | 85 |
| Couple mini (ln.lb) ⁽²⁾ | 26,5 | 19,1 |

| | | |
|---|---|---|
| (1) Viscosimètre MOONEY MV 2000E (mesure de Mooney Large (1+4) à 100 °C) | | |
| (2) Rhéomètre MONSANTO 100 S | | |

La formulation obtenue à partir de la silice selon l'invention conduit aux valeurs les plus faibles.

Ceci traduit une plus grande facilité de mise en oeuvre des mélanges préparés à partir de silice selon l'invention, en particulier au niveau des opérations d'extrusion et de calandrages souvent réalisées lors de la confection de compositions élastomériques (moindre dépense d'énergie pour mettre en oeuvre le mélange, plus grande facilité d'injection lors du mélangeage, moindre gonflement en filière lors de l'extrusion, moindre retrait au calandrage,...).

### 2- Propriétés mécaniques

Les mesures sont réalisées sur les formulations vulcanisées.

La vulcanisation est réalisée en portant les formulations à 150 °C pendant 40 minutes.

Les normes suivantes ont été utilisées :
(i) essais de traction (modules, résistance à la rupture) : NFT 46-002 ou ISO 37-1977
(ii) essais de résistance à l'abrasion DIN 53-516

Les résultats obtenus sont consignés dans le tableau III ci-dessous.

**TABLEAU III**

| | MP1 | P1 |
|---|---|---|
| module 300 % / module 100 % | 3,4 | 5,4 |
| Résistance rupture (MPa) | 17,1 | 20,8 |
| Résistance abrasion (mm³) ⁽¹⁾ | 58 | 54 |

| | | |
|---|---|---|
| (1) la valeur mesurée est la perte à l'abrasion : plus elle est faible et meilleure la résistance à l'abrasion. | | |

Ces derniers résultats montrent le bon effet de renforcement conféré par la silice selon l'invention.

Ainsi, tout en conduisant à des propriétés rhéologiques plus satisfaisantes, la silice selon l'invention procure des propriétés mécaniques meilleures que celles obtenues avec la silice de l'art antérieur.

D'une part, la silice selon l'invention conduit à un rapport module 300 % / module 100 % supérieur à celui obtenu avec la silice de l'art antérieur, preuve d'une meilleure dispersion de la silice au sein de la matrice caoutchouc.

D'autre part, le haut pouvoir renforçant de la silice selon l'invention est confirmé par la valeur élevée obtenue pour la résistance à la rupture.

Enfin, concernant la résistance à l'abrasion, on note que la perte à l'abrasion est réduite par rapport à la silice comparative.

### 3- Propriétés dynamiques

Les mesures sont réalisées sur les formulations vulcanisées.

La vulcanisation est obtenue en portant les formulations à 150 °C pendant 40 minutes. Les résultats (illustrant la tendance à l'échauffement) sont reportés dans le tableau IV ci-dessous (plus la valeur est faible, moindre est la tendance à l'échauffement). On a indiqué l'appareillage utilisé pour conduire les mesures.

**TABLEAU IV**

| | MP1 | P1 |
|---|---|---|
| Echauffement interne (°C)⁽¹⁾ | 90 | 69 |

| | | |
|---|---|---|
| (1) Flexomètre GOODRICH | | |

La tendance à l'échauffement obtenu à partir de la silice selon l'invention est faible.

## Revendications

1. Procédé de préparation de silice précipitée du type comprenant la réaction d'un silicate de métal alcalin M avec un agent acidifiant ce par quoi l'on obtient une suspension de silice précipitée, puis la séparation et le séchage de cette suspension, dans lequel on réalise la précipitation de la manière suivante :
(i) on forme un pied de cuve initial comportant un silicate de métal alcalin M, la concentration en silicate (exprimée en SiO₂) dans ledit pied de cuve initial étant inférieure à 20 g/l,
(ii) on ajoute l'agent acidifiant audit pied de cuve jusqu'à ce qu'au moins 5 % de la quantité de M₂O présente dans ledit pied de cuve soient neutralisés,
(iii) on ajoute au milieu réactionnel simultanément de l'agent acidifiant et un silicate de métal alcalin M telle que le rapport quantité de silicate ajoutée (exprimée en SiO₂) / quantité de silicate présente dans le pied de cuve initial (exprimée en SiO₂) soit supérieur à 4 et d'au plus 100,
caractérisé en ce que ledit procédé comprend une des deux opérations (a) ou (b) suivantes :
(a) on ajoute, après l'étape (iii), au milieu réactionnel au moins un composé du zinc, puis un agent basique, et, lorsque ladite séparation comporte une filtration et un délitage du gâteau issu de cette filtration, ledit délitage est de préférence effectué en présence d'au moins un composé de l'aluminium,
(b) on ajoute, après l'étape (iii), au milieu réactionnel simultanément un silicate et au moins un composé du zinc et, lorsque ladite séparation comporte une filtration et un délitage du gâteau issu de cette filtration, le délitage est de préférence effectué en présence d'au moins un composé de l'aluminium.

2. Procédé selon la revendication 1, comprenant la réaction d'un silicate avec un agent acidifiant ce par quoi l'on obtient une suspension de silice précipitée, puis la séparation et le séchage de cette suspension, dans lequel :
- on réalise la précipitation de la manière suivante :
(i) on forme un pied de cuve initial comportant un silicate de métal alcalin M, la concentration en silicate (exprimée en SiO₂) dans ledit pied de cuve initial étant inférieure à 20 g/l,
(ii) on ajoute l'agent acidifiant audit pied de cuve jusqu'à ce qu'au moins 5 % de la quantité de M₂O présente dans ledit pied de cuve soient neutralisés,
(iii) on ajoute au milieu réactionnel simultanément de l'agent acidifiant et un silicate de métal alcalin M telle que le rapport quantité de silicate ajoutée (exprimée en SiO₂) / quantité de silicate présente dans le pied de cuve initial (exprimée en SiO₂) soit supérieur à 4 et d'au plus 100,
- puis, on effectue les étapes suivantes :
(iv) on ajoute au milieu réactionnel au moins un composé du zinc,
(v) on ajoute au milieu réactionnel un agent basique, de préférence jusqu'à l'obtention d'une valeur du pH du milieu réactionnel comprise entre 7,4 et 10, en particulier entre 7,8 et 9,
(vi) on ajoute au milieu réactionnel de l'agent acidifiant, de préférence jusqu'à l'obtention d'une valeur du pH du milieu réactionnel d'au moins 7, en particulier comprise entre 7 et 8,5,
- la séparation comporte une filtration et un délitage du gâteau issu de la filtration, le délitage étant effectué en présence d'au moins un composé de l'aluminium.

3. Procédé selon la revendication 2, caractérisé en ce que, entre l'étape (iii) et l'étape (iv), on ajoute au milieu réactionnel de l'agent acidifiant, de préférence jusqu'à l'obtention d'une valeur du pH du milieu réactionnel comprise entre 3 et 6,5.

4. Procédé selon la revendication 1, comprenant la réaction d'un silicate avec un agent acidifiant ce par quoi l'on obtient une suspension de silice précipitée, puis la séparation et le séchage de cette suspension, dans lequel on réalise la précipitation de la manière suivante :
(i) on forme un pied de cuve initial comportant un silicate de métal alcalin M, la concentration en silicate (exprimée en SiO₂) dans ledit pied de cuve initial étant inférieure à 20 g/l,
(ii) on ajoute l'agent acidifiant audit pied de cuve jusqu'à ce qu'au moins 5 % de la quantité de M₂O présente dans ledit pied de cuve soient neutralisés,
(iii) on ajoute au milieu réactionnel simultanément de l'agent acidifiant et un silicate de métal alcalin M telle que le rapport quantité de silicate ajoutée (exprimée en SiO₂) / quantité de silicate présente dans le pied de cuve initial (exprimée en SiO₂) soit supérieur à 4 et d'au plus 100,
(iv) on ajoute au milieu réactionnel simultanément un silicate et au moins un composé du zinc.

5. Procédé selon la revendication 4, caractérisé en ce que, après l'étape (iv), on ajoute au milieu réactionnel de l'agent acidifiant.

6. Procédé selon l'une des revendications 4 et 5, caractérisé en ce que la séparation comporte une filtration et un délitage du gâteau issu de la filtration, le délitage étant effectué en présence d'au moins un composé de l'aluminium.

7. Procédé selon l'une des revendications 1 à 6, caractérisé en ce que, dans l'étape (ii), on ajoute l'agent acidifiant jusqu'à ce qu'au moins 50 % de la quantité de M₂O présente dans ledit pied de cuve initial soient neutralisés.

8. Procédé selon l'une des revendications 1 à 7, caractérisé en ce que, dans l'étape (iii), on ajoute au milieu réactionnel simultanément de l'agent acidifiant et un silicate de métal alcalin M telle que le rapport quantité de silicate ajoutée (exprimée en SiO₂) / quantité de silicate présente dans le pied de cuve initial (exprimée en SiO₂) soit compris entre 12 et 100, de préférence entre 12 et 50.

9. Procédé selon l'une des revendications 1 à 7, caractérisé en ce que, dans l'étape (iii), on ajoute au milieu réactionnel simultanément de l'agent acidifiant et un silicate de métal alcalin M telle que le rapport quantité de silicate ajoutée (exprimée en SiO₂) / quantité de silicate présente dans le pied de cuve initial (exprimée en SiO₂) soit supérieur à 4 et inférieur à 12, de préférence compris entre 5 et 11,5.

10. Procédé selon l'une des revendications 1 à 9, caractérisé en ce que, pendant toute l'étape (iii), la quantité d'agent acidifiant ajoutée est telle que 80 à 99 % de la quantité de M₂O ajoutée soient neutralisés.

11. Procédé selon l'une des revendications 1 à 10, caractérisé en ce que, dans l'étape (iii), on procède à ladite addition simultanée d'agent acidifiant et de silicate à un premier palier de pH du milieu réactionnel, pH₁, puis à un second palier de pH du milieu réactionnel, pH₂, tel que 7 < pH₂ < pH₁ < 9.

12. Procédé selon l'une des revendications 1 à 11, caractérisé en ce qu'aucun électrolyte n'est utilisé.

13. Procédé selon l'une des revendications 1 à 12, caractérisé en ce que ladite concentration en silicate exprimée en SiO₂ dans ledit pied de cuve initial est d'au plus 11 g/l.

14. Procédé selon l'une des revendications 1 à 12, caractérisé en ce que ladite concentration en silicate exprimée en SiO₂ dans ledit pied de cuve initial est d'au moins 8 g/l.

15. Procédé selon la revendication 14, caractérisé en ce que ladite concentration en silicate exprimée en SiO₂ dans ledit pied de cuve initial est comprise entre 10 et 15 g/l.

16. Procédé selon l'une des revendications 1 à 15, caractérisé en ce que ladite séparation comprend une filtration effectuée au moyen d'un filtre presse.

17. Procédé selon l'une des revendications 1 à 13, caractérisé en ce que ledit séchage est effectué par atomisation.

18. Procédé selon l'une des revendications 14 à 16, caractérisé en ce que ledit séchage est effectué par atomisation au moyen d'un atomiseur à buses.

19. Procédé selon l'une des revendications 17 et 18, caractérisé en ce que le produit séché est ensuite aggloméré.

20. Procédé selon l'une des revendications 17 et 18, caractérisé en ce que le produit séché est ensuite broyé, puis, éventuellement, aggloméré.

21. Procédé selon l'une des revendications 1 à 20, caractérisé en ce que la quantité de composé du zinc utilisée est telle que la silice précipitée préparée contient entre 1 et 5 % en poids de zinc.

22. Procédé selon l'une des revendications 1 à 21, caractérisé en ce que le composé du zinc est un sel organique ou inorganique du zinc, le sel organique étant de préférence choisi parmi les sels d'acides carboxyliques ou ploycarboxyliques, et le sel inorganique étant de préférence choisi parmi les halogénures, les oxyhalogénures, les nitrates, les phosphates, les sulfates et les oxysulfates.

23. Procédé selon l'une des revendications 1 à 22, caractérisé en ce que le composé du zinc est un sulfate de zinc.

24. Procédé selon l'une des revendications 1 à 23, caractérisé en ce que le composé de l'aluminium est un aluminate de métal alcalin.

25. Procédé selon l'une des revendications 1 à 24, caractérisé en ce que le composé de l'aluminium est un aluminate de sodium.

26. Silice précipitée caractérisée en ce qu'elle possède :
- une surface spécifique CTAB comprise entre 90 et 250 m²/g,
- une prise d'huile DOP inférieure à 300 ml/100g,
- une distribution poreuse telle que le volume poreux constitué par les pores dont le diamètre est compris entre 175 et 275 Å représente moins de 50 % du volume poreux constitué par les pores de diamètres inférieurs ou égaux à 400 Å,
- une teneur en zinc comprise entre 1 et 5 % en poids,
en ce qu'elle se présente sous au moins une des formes suivantes : billes sensiblement sphériques de taille moyenne d'au moins 80 µm, poudre de taille moyenne d'au moins 15 µm, granulés de taille d'au moins 1 mm,
et en ce que le nombre N de molécules d'acide stéarique consommées par nm² de surface de silice, lorsque l'on fait réagir de l'acide stéarique avec de ladite silice dans du xylène pendant 2 heures à 120 °C, est d'au moins 1.

27. Silice selon la revendication 26, caractérisée en ce que le zinc n'est pas sous forme cristallisée.

28. Silice selon l'une des revendications 26 et 27, caractérisée en ce que N est d'au moins 1,2, de préférence d'au moins 1,5.

29. Silice selon l'une des revendications 26 à 28, caractérisée en ce qu'elle présente une teneur en zinc comprise entre 1,5 et 4 % en poids.

30. Silice selon l'une des revendications 26 à 29, caractérisée en ce qu'elle présente :
- une surface spécifique CTAB comprise entre 90 et 185 m²/g,
- un diamètre médian (⌀₅₀), après désagglomération aux ultra-sons, inférieur à 6 µm, de préférence inférieur à 5 µm.

31. Silice selon la revendication 30, caractérisée en ce qu'elle présente :
- une surface spécifique CTAB comprise entre 90 et 140 m²/g,
- un diamètre médian (⌀₅₀), après désagglomération aux ultra-sons, inférieur à 4,5 µm.

32. Silice selon la revendication 30, caractérisée en ce qu'elle présente :
- une surface spécifique CTAB comprise entre 140 et 185 m²/g,
- un facteur de désagglomération aux ultra-sons (F_{D}) supérieur à 5,5 ml.

33. Silice selon l'une des revendications 26 à 29, caractérisée en ce qu'elle présente :
- une surface spécifique CTAB supérieure à 185 m²/g et inférieure à 220 m²/g,
- un diamètre médian (⌀₅₀), après désagglomération aux ultra-sons, inférieur à 8,5 µm, de préférence inférieur à 7 µm.

34. Silice selon la revendication 33, caractérisée en ce qu'elle présente un facteur de désagglomération aux ultra-sons (F_{D}) supérieur à 5,5 ml.

35. Silice selon l'une des revendications 26 à 34, caractérisée en ce qu'elle se présente sous forme de billes sensiblement sphériques de taille moyenne d'au moins 100 µm, en particulier d'au moins 150 µm.

36. Utilisation comme charge renforçante pour élastomères d'une silice selon l'une des revendications 26 à 35.

37. Utilisation d'une silice selon l'une des revendications 26 à 35 pour améliorer les propriétés rhéologiques des élastomères.

## Patentansprüche

1. Verfahren zur Herstellung von präzipitiertem Silicamaterial oder Kieselhydrogel des Typs, der die Umsetzung eines Silicats eines Alkalimetalls M mit einem Säuerungsmittel, worauf man eine Suspension von präzipitiertem Silicamaterial oder Kieselhydrogel erhält, dann die Trennung und die Trocknung dieser Suspension umfaßt, in welchem man die Präzipitation auf die folgende Weise ausführt:
(i) man bildet eine anfängliche Vorlage, umfassend ein Silicat eines Alkalimetalls M, wobei die Konzentration an Silicat (ausgedrückt als SiO₂) in der anfänglichen Vorlage unter 20 g/l beträgt,
(ii) man setzt das Säuerungsmittel der Vorlage bis dahin zu, daß mindestens 5% der Menge von M₂O, die in der Vorlage anwesend ist, neutralisiert sind,
(iii) man setzt dem Reaktionsmedium gleichzeitig Säuerungsmittel und ein Silicat eines Alkalimetalls M dergestalt zu, daß das Mengenverhältnis von zugesetztem Silicat (ausgedrückt als SiO₂)/Menge an in der anfänglichen Vorlage anwesendem Silicat (ausgedrückt als SiO₂) über 4 und höchstens 100 beträgt,
dadurch gekennzeichnet, daß das Verfahren einen der zwei folgenden Verfahrensschritte (a) oder (b) umfaßt:
(a) man setzt nach Schritt (iii) dem Reaktionsmedium mindestens eine Zinkverbindung, dann ein basisches Mittel zu und, wenn die Trennung eine Filtration und eine Fragmentierung des aus dieser Filtration stammenden Kuchens umfaßt, wird diese Fragmentierung vorzugsweise in Gegenwart von mindestens einer Aluminiumverbindung ausgeführt,
(b) man setzt nach Schritt (iii) dem Reaktionsmedium gleichzeitig ein Silicat und mindestens eine Zinkverbindung zu und, wenn die Trennung eine Filtration und eine Fragmentierung des aus dieser Filtration stammenden Kuchens umfaßt, wird diese Fragmentierung vorzugsweise in Gegenwart von mindestens einer Aluminiumverbindung ausgeführt.

2. Verfahren nach Anspruch 1, welches die Umsetzung eines Silicats mit einem Säuerungsmittel, worauf man eine Suspension von präzipitiertem Silicamaterial oder Kieselhydrogel erhält, dann die Trennung und die Trocknung dieser Suspension umfaßt, in welchem:
- man die Präzipitation auf die folgende Weise ausführt:
(i) man bildet eine anfängliche Vorlage, die ein Silicat eines Alkalimetalls M umfaßt, wobei die Konzentration an Silicat (ausgedrückt als SiO₂) in der anfänglichen Vorlage unter 20 g/l beträgt;
(ii) man setzt das Säuerungsmittel der Vorlage bis dahin zu, daß mindestens 5% der Menge von M₂O, die in der Vorlage anwesend ist, neutralisiert sind,
(iii) man setzt dem Reaktionsmedium gleichzeitig Säuerungsmittel und ein Silicat eines Alkalimetalls M dergestalt zu, daß das Mengenverhältnis von zugesetztem Silicat (ausgedrückt als SiO₂)/Menge an in der anfänglichen Vorlage anwesendem Silicat (ausgedrückt als SiO₂) über 4 und höchstens 100 beträgt,
- dann die folgenden Schritte ausführt:
(iv) man setzt dem Reaktionsmedium mindestens eine Zinkverbindung zu,
(v) man setzt dem Reaktionsmedium ein basisches Mittel zu, vorzugsweise bis zur Einstelllung eines pH-Werts des Reaktionsmediums zwischen 7,4 und 10, insbesondere zwischen 7,8 und 9,
(vi) man setzt dem Reaktionsmedium Säuerungsmittel zu, vorzugsweise bis zur Einstelllung eines pH-Werts des Reaktionsmediums von mindestens 7, insbesondere zwischen 7 und 8,5,
- die Trennung eine Filtration und eine Fragmentierung des aus der Filtration stammenden Kuchens umfaßt, wobei die Fragmentierung in Gegenwart von mindestens einer Aluminiumverbindung ausgeführt wird.

3. Verfahren nach Anspruch 2, dadurch gekennzeichnet, daß man zwischen Schritt (iii) und Schritt (iv) dem Reaktionsmedium Säuerungsmittel, vorzugsweise bis zur Einstellung eines pH-Werts des Reaktionsmediums zwischen 3 und 6,5, zusetzt.

4. Verfahren nach Anspruch 1, welches die Umsetzung eines Silicats mit einem Säuerungsmittel, worauf man eine Suspension von präzipitiertem Silicamaterial oder Kieselhydrogel erhält, dann die Trennung und die Trocknung dieser Suspension umfaßt, in welchem man die Präzipitation auf die folgende Weise ausführt:
(i) man bildet eine anfängliche Vorlage, die ein Silicat eines Alkalimetalls M umfaßt, wobei die Konzentration an Silicat (ausgedrückt als SiO₂) in der anfänglichen Vorlage unter 20 g/l beträgt;
(ii) man setzt das Säuerungsmittel der Vorlage bis dahin zu, daß mindestens 5% der Menge von M₂O, die in der Vorlage anwesend ist, neutralisiert sind,
(iii) man setzt dem Reaktionsmedium gleichzeitig Säuerungsmittel und ein Silicat eines Alkalimetalls M dergestalt zu, daß das Mengenverhältnis von zugesetztem Silicat (ausgedrückt als SiO₂)/Menge an in der anfänglichen Vorlage anwesendem Silicat (ausgedrückt als SiO₂) über 4 und höchstens 100 beträgt,
(iv) man setzt dem Reaktionsmedium gleichzeitig ein Silicat und mindestens eine Zinkverbindung zu.

5. Verfahren nach Anspruch 4, dadurch gekennzeichnet, daß man nach Schritt (iv) dem Reaktionsmedium Säuerungsmittel zusetzt.

6. Verfahren nach einem der Ansprüche 4 und 5, dadurch gekennzeichnet, daß die Trennung eine Filtration und eine Fragmentierung des aus der Filtration stammenden Kuchens umfaßt, wobei die Fragmentierung in Gegenwart von mindestens einer Aluminiumverbindung ausgeführt wird.

7. Verfahren nach einem der Ansprüche 1 bis 6, dadurch gekennzeichnet, daß man in Schritt (ii) das Säuerungsmittel bis dahin zusetzt, daß mindestens 50% der in der anfänglichen Vorlage anwesenden Menge an M₂O neutralisiert werden.

8. Verfahren nach einem der Ansprüche 1 bis 7, dadurch gekennzeichnet, daß man in Schritt (iii) dem Reaktionsmedium gleichzeitig Säuerungsmittel und ein Silicat eines Alkalimetalls M dergestalt zusetzt, daß das Mengenverhältnis von zugesetztem Silicat (ausgedrückt als SiO₂)/Menge an in der anfänglichen Vorlage anwesendem Silicat (ausgedrückt als SiO₂) zwischen 12 und 100, vorzugsweise zwischen 12 und 50 beträgt.

9. Verfahren nach einem der Ansprüche 1 bis 7, dadurch gekennzeichnet, daß man in Schritt (iii) dem Reaktionsmedium gleichzeitig Säuerungsmittel und ein Silicat eines Alkalimetalls M dergestalt zusetzt, daß das Mengenverhältnis von zugesetztem Silicat (ausgedrückt als SiO₂)/Menge an in der anfänglichen Vorlage anwesendem Silicat (ausgedrückt als SiO₂) über 4 und unter 12, vorzugsweise zwischen 5 und 11,5 beträgt.

10. Verfahren nach einem der Ansprüche 1 bis 9, dadurch gekennzeichnet, daß während des gesamten Schritts (iii) die zugesetzte Menge an Säuerungsmittel so ist, daß 80 bis 99% der zugesetzten Menge von M₂O neutralisiert werden.

11. Verfahren nach einem der Ansprüche 1 bis 10, dadurch gekennzeichnet, daß man in Schritt (iii) die gleichzeitige Zugabe von Säuerungsmittel und von Silicat bei einem ersten pH-Niveau des Reaktionsmediums, pH₁, dann bei einem zweiten pH-Niveau des Reaktionsmediums, pH₂, so daß 7 < pH₂ < pH₁ < 9 ist, ausführt.

12. Verfahren nach einem der Ansprüche 1 bis 11, dadurch gekennzeichnet, daß keinerlei Elektrolyt verwendet wird.

13. Verfahren nach einem der Ansprüche 1 bis 12, dadurch gekennzeichnet, daß die Konzentration an Silicat, ausgedrückt als SiO₂, in der anfänglichen Vorlage höchstens 11 g/l beträgt.

14. Verfahren nach einem der Ansprüche 1 bis 12, dadurch gekennzeichnet, daß die Konzentration an Silicat, ausgedrückt als SiO₂, in der anfänglichen Vorlage mindestens 8 g/l beträgt.

15. Verfahren nach Anspruch 14, dadurch gekennzeichnet, daß die Konzentration an Silicat, ausgedrückt als SiO₂, in der anfänglichen Vorlage zwischen 10 und 15 g/l beträgt.

16. Verfahren nach einem der Ansprüche 1 bis 15, dadurch gekennzeichnet, daß die Trennung eine Filtration, die mittels einer Filterpresse ausgeführt wird, umfaßt.

17. Verfahren nach einem der Ansprüche 1 bis 13, dadurch gekennzeichnet, daß die Trocknung durch Zerstäubung ausgeführt wird.

18. Verfahren nach einem der Ansprüche 14 bis 16, dadurch gekennzeichnet, daß die Trocknung durch Zerstäubung mittels eines Zerstäubers mit Zerstäubungsdüsen erfolgt.

19. Verfahren nach einem der Ansprüche 17 und 18, dadurch gekennzeichnet, daß das getrocknete Produkt danach agglomeriert wird.

20. Verfahren nach einem der Ansprüche 17 und 18, dadurch gekennzeichnet, daß das getrocknete Produkt danach zerkleinert, dann gegebenenfalls agglomeriert wird.

21. Verfahren nach einem der Ansprüche 1 bis 20, dadurch gekennzeichnet, daß die verwendete Menge an Zinkverbindung so ist, daß das hergestellte präzipitierte Silicamaterial oder Kieselhydrogel zwischen 1 und 5 Gew.-% Zink enthält.

22. Verfahren nach einem der Ansprüche 1 bis 21, dadurch gekennzeichnet, daß die Zinkverbindung ein organisches oder anorganisches Zinksalz ist, wobei das organische Salz vorzugsweise ausgewählt wird unter den Salzen von Carbonsäuren oder Polycarbonsäuren und das anorganische Salz vorzugsweise ausgewählt wird unter den Halogeniden, Oxyhalogeniden, Nitraten, Phosphaten, Sulfaten und Oxysulfaten.

23. Verfahren nach einem der Ansprüche 1 bis 22, dadurch gekennzeichnet, daß die Zinkverbindung ein Zinksulfat ist.

24. Verfahren nach einem der Ansprüche 1 bis 23, dadurch gekennzeichnet, daß die Aluminiumverbindung ein Alkalimetallaluminat ist.

25. Verfahren nach einem der Ansprüche 1 bis 24, dadurch gekennzeichnet, daß die Aluminiumverbindung ein Natriumaluminat ist.

26. Präzipitiertes Silicamaterial oder Kieselhydrogel, dadurch gekennzeichnet, daß es aufweist:
- eine spezifische CTAB-Oberfläche zwischen 90 und 250 m²/g,
- eine Ölaufnahme oder Ölzahl DOP unter 300 ml/100 g,
- eine solche Porenverteilung, daß das durch die Poren, deren Durchmesser zwischen 175 und 275 Å liegt, gebildete Porenvolumen mindestens 50% des Porenvolumens, das durch die Poren mit Durchmessern unter oder gleich 400 Å gebildet wird, ausmacht,
- einen Zinkgehalt zwischen 1 und 5 Gew.-%,
daß es in mindestens einer der folgenden Formen vorliegt: im wesentlichen kugelförmigen Kügelchen mit einer mittleren Größe von mindestens 80 µm, Pulver einer mittleren Größe von mindestens 15 µm, Granulat mit einer Größe von mindestens 1 mm,
und daß die Zahl N von Stearinsäuremolekülen, die pro nm² Oberfläche des präzipitierten Silicamaterials oder Kieselhydrogels verbraucht werden, wenn man Stearinsäure mit dem präzipitierten Silicamaterial oder Kieselhydrogel in Xylol während 2 h bei 120°C reagieren läßt, mindestens 1 beträgt.

27. Silicamaterial nach Anspruch 26, dadurch gekennzeichnet, daß das Zink nicht in kristallisierter Form vorliegt.

28. Silicamaterial nach einem der Ansprüche 26 und 27, dadurch gekennzeichnet, daß N mindestens 1,2, vorzugsweise mindestens 1,5 ist.

29. Silicamaterial nach einem der Ansprüche 26 bis 28, dadurch gekennzeichnet, daß es einen Gehalt an Zink zwischen 1,5 und 4 Gew.-% aufweist.

30. Silicamaterial nach einem der Ansprüche 26 bis 29, dadurch gekennzeichnet, daß es aufweist:
- eine spezifische CTAB-Oberfläche zwischen 90 und 185 m²/g,
- einen mittleren Durchmesser (⌀₅₀) nach Ultraschall-Desagglomeration unter 6 µm, vorzugsweise unter 5 µm.

31. Silicamaterial nach Anspruch 30, dadurch gekennzeichnet, daß es aufweist:
- eine spezifische CTAB-Oberfläche zwischen 90 und 140 m²/g,
- einen mittleren Durchmesser (⌀₅₀) nach Ultraschall-Desagglomeration unter 4,5 µm.

32. Silicamaterial nach Anspruch 30, dadurch gekennzeichnet, daß es aufweist:
- eine spezifische CTAB-Oberfläche zwischen 140 und 185 m²/g,
- einen Ultraschall-Desagglomerationsfaktor (F_{D}) über 5,5 ml.

33. Silicamaterial nach einem der Ansprüche 26 bis 29, dadurch gekennzeichnet, daß es aufweist:
- eine spezifische CTAB-Oberfläche über 185 m²/g und unter 220 m²/g,
- einen mittleren Durchmesser (⌀₅₀) nach Ultraschall-Desagglomeration unter 8,5 µm, vorzugsweise unter 7 µm.

34. Silicamaterial nach Anspruch 33, dadurch gekennzeichnet, daß es einen Ultraschall-Desagglomerationsfaktor (F_{D}) über 5,5 ml aufweist.

35. Silicamaterial nach einem der Ansprüche 26 bis 34, dadurch gekennzeichnet, daß es in Form von im wesentlichen kugelförmigen Kügelchen einer mittleren Größe von mindestens. 100 µm, insbesondere mindestens 150 µm vorliegt.

36. Verwendung eines Silicamaterials nach einem der Ansprüche 26 bis 35 als Verstärkungsfüllstoff für Elastomere.

37. Verwendung eines Silicamaterials nach einem der Ansprüche 26 bis 35 für die Verbesserung der rheologischen Eigenschaften von Elastomeren.

## Claims

1. A process for preparing a precipitated silica, of the type comprising reacting a silicate of an alkali metal M with an acidifying agent so as to obtain a suspension of precipitated silica, then separating and drying that suspension, in which precipitation is carried out as follows:
(i) an initial stock comprising a silicate of an alkali metal M is formed, the concentration of silicate (expressed as SiO₂) in said initial stock being less than 20 g/l;
(ii) the acidifying agent is added to said stock until at least 5% of the quantity of M₂O present in said stock has been neutralised;
(iii) acidifying agent and a silicate of an alkali metal M are simultaneously added to the reaction medium such that the ratio of the quantity of silicate added (expressed as SiO₂)/quantity of silicate present in the initial stock (expressed as SiO₂) is more than 4 and at most 100:
characterized in that said process comprises one of the two following operations a) or b):
(a) after step (iii), at least one zinc compound is added to the reaction medium followed by a basic agent and, when said separation comprises filtration and disintegration of the cake from that filtration, said disintegration preferably being carried out in the presence of at least one aluminium compound;
(b) after step (iii), a silicate and at least one zinc compound are simultaneously added to the reaction medium and, when said separation comprises filtration and disintegration of the cake from that filtration, the disintegration is preferably carried out in the presence of at least one aluminium compound.

2. A process according to claim 1, comprising reacting a silicate with an acidifying agent so as to obtain a suspension of precipitated silica, then separating and drying that suspension, in which:
• precipitation is carried out as follows:
(i) an initial stock comprising a silicate of an alkali metal M is formed, the concentration of silicate (expressed as SiO₂) in said initial stock being less than 20 g/l;
(ii) the acidifying agent is added to said stock until at least 5% of the quantity of M₂O present in said stock has been neutralised;
(iii) acidifying agent and a silicate of an alkali metal M are simultaneously added to the reaction medium such that the ratio of the quantity of silicate added (expressed as SiO₂)/quantity of silicate present in the initial stock (expressed as SiO₂) is more than 4 and at most 100;
• then the following successive steps are carried out:
(iv) at least one zinc compound is added to the reaction medium;
(v) a basic agent is added to the reaction medium, preferably until the pH of the reaction medium reaches a value of the range 7.4 to 10, in particular in the range 7.8 to 9;
(vi) acidifying agent is added to the reaction medium, preferably until the pH of the reaction medium reaches a value of at least 7, preferably in the range 7 to 8.5;
• separation comprises filtration and disintegration of the cake resulting from filtration, disintegration being carried out in the presence of at least one aluminium compound.

3. A process according to claim 2, characterized in that acidifying agent is added to the reaction medium between step (iii) and step (iv), preferably until the pH of the reaction medium reaches a value in the range 3 to 6.5.

4. A process according to claim 1, comprising reacting a silicate with an acidifying agent so as to obtain a suspension of precipitated silica, then separating and drying that suspension, in which precipitation is carried out as follows:
(i) an initial stock comprising a silicate of an alkali metal M and an electrolyte is formed, the concentration of silicate (expressed as SiO₂) in said initial stock being less than 20 g/l;
(ii) the acidifying agent is added to said stock until at least 5% of the quantity of M₂O present in said stock has been neutralised;
(iii) acidifying agent and a silicate of an alkali metal M are simultaneously added to the reaction medium such that the ratio of the quantity of silicate added (expressed as SiO₂)/quantity of silicate present in the initial stock (expressed as SiO₂) is more than 4 and at most 100;
(iv) a silicate and at least one zinc compound are simultaneously added to the reaction medium.

5. A process according to claim 4, characterized in that after step (iv), acidifying agent is added to the reaction medium.

6. A process according to claim 4 or claim 5, characterized in that separation comprises filtration and disintegration of the cake resulting from filtration, disintegration being carried out in the presence of at least one aluminium compound.

7. A process according to any one of claims 1 to 6, characterized in that in step (ii), the acidifying agent is added until at least 50% of the quantity of M₂O present in said initial stock has been neutralised.

8. A process according to any one of claims 1 to 7, characterized in that in step (iii), acidifying agent and a silicate of an alkali metal M are simultaneously added to the reaction medium such that the ratio of the quantity of silicate added (expressed as SiO₂)/quantity of silicate present in the initial stock (expressed as SiO₂) is in the range 12 to 100, preferably in the range 12 to 50.

9. A process according to any one of claims 1 to 7, characterized in that in step (iii), acidifying agent and a silicate of an alkali metal M are simultaneously added to the reaction medium such that the ratio of the quantity of silicate added (expressed as SiO₂)/quantity of silicate present in the initial stock (expressed as SiO₂) is more than 4 and less than 12, preferably in the range 5 to 11.5.

10. A process according to any one of claims 1 to 9, characterized in that during the entire duration of step (iii), the quantity of acidifying agent added is such that 80% to 99% of the quantity of added M₂O is neutralised.

11. A process according to any one of claims 1 to 10, characterized in that during the entire duration of step (iii), said simultaneous addition of acidifying agent and silicate is carried out at a first constant pH stage of the reaction medium, pH₁, then at a second constant pH stage of the reaction medium, pH₂, such that 7 < pH₂ < pH₁ < 9.

12. A process according to any one of claims 1 to 11, characterized in that no electrolyte is used.

13. A process according to any one of claims 1 to 12, characterized in that said silicate concentration, expressed as SiO₂, in said initial stock is at most 11 g/l.

14. A process according to any one of claims 1 to 12, characterized in that said silicate concentration, expressed as SiO₂, in said initial stock is at least 8 g/l.

15. A process according to claim 14, characterized in that said silicate concentration, expressed as SiO₂, in said initial stock is in the range 10 to 15 g/l.

16. A process according to any one of claims 1 to 15, characterized in that said separation comprises filtration carried out using a filter press.

17. A process according to any one of claims 1 to 13, characterized in that said drying is carried out by spraying.

18. A process according to any one of claims 14 to 16, characterized in that said drying is carried out using a nozzle sprayer.

19. A process according to claim 17 or claim 18, characterized in that the dried product is subsequently agglomerated.

20. A process according to claim 17 or claim 18, characterized in that the dried product is subsequently ground then optionally agglomerated.

21. A process according to any one of claims 1 to 20, characterized in that the quantity of zinc compound used is such that the prepared precipitated silica contains between 1% and 5% by weight of zinc.

22. A process according to any one of claims 1 to 21, characterized in that the zinc compound is an organic or inorganic zinc salt, the organic zinc salt preferably being selected from salts of carboxylic or polycarboxylic acids, and the inorganic salt preferably being selected from halides, oxyhalides, nitrates, phosphates, sulphates and oxysulphates.

23. A process according to any one of claims 1 to 22, characterized in that the zinc compound is a zinc sulphate.

24. A process according to any one of claims 1 to 23, characterized in that the aluminium compound is an alkali metal aluminate.

25. A process according to any one of claims 1 to 24, characterized in that the aluminium compound is a sodium aluminate.

26. A precipitated silica, characterized in that it has:
• a CTAB specific surface area in the range 90 to 250 m²/g;
• a DOP oil absorption value of less than 300 ml/100g;
• a pore distribution such that the pore volume, constituted by pores with a diameter in the range 175 Å to 275 Å, represents less than 50% of the pore volume constituted by pores with diameters of 400 Å or less;
• a zinc content in the range 1% to 5% by weight;
and in that it is in at least one of the following forms: substantially spherical beads with an average size of at least 80 µm, a powder with an average size of at least 15 µm, or granules with a size of at least 1 mm. and in that the number N of stearic acid molecules consumed per nm² of silica surface, when stearic acid is reacted with said silica in xylene for 2 hours at 120°C, is at least 1.

27. A silica according to claim 26, characterized in that the zinc is not in the crystalline form.

28. A silica according to claim 26 and claim 27. characterized in that N is at least 1.2, preferably at least 1.5.

29. A silica according to any one of claims 26 to 28. characterized in that its zinc content is in the range 1.5% to 4% by weight.

30. A silica according to any one of claims 26 to 29, characterized in that it has:
• a CTAB specific surface area in the range 90 to 185 m²/g;
• a median diameter (⌀₅₀), after disagglomeration using ultra-sound, of less than 6 µm, preferably less than 5 µm.

31. A silica according to claim 30, characterized in that it has:
• a CTAB specific surface area in the range 90 to 140 m²/g;
• a median diameter (⌀₅₀), after disagglomeration using ultra-sound, of less than 4.5 µm.

32. A silica according to claim 30, characterized in that it has:
• a CTAB specific surface area in the range 140 to 185 m²/g;
• an ultrasound disagglomeration factor (F_{D}) of more than 5.5 ml.

33. A silica according to any one of claims 26 to 29, characterized in that it has:
• a CTAB specific surface area of more than 185 m²/g and less than 220 m²/g;
• a median diameter (⌀₅₀), after disagglomeration using ultra-sound, of less than 8.5 µm, preferably less than 7 µm.

34. A silica according to claim 33, characterized in that it has an ultrasound disagglomeration factor (F_{D}) of more than 5.5 ml.

35. A silica according to any one of claims 26 to 34, characterized in that it is in the form of substantially spherical beads with an average size of at least 100 µm, in particular at least 150 µm.

36. Use, as a reinforcing filler for elastomers, of a silica according to any one of claims 26 to 35.

37. Use of a silica according to any one of claims 26 to 35 to improve the rheological properties of elastomers.
